# FASCICULE DE BREVET EUROPEEN

(11) **EP 2 173 581 B1**
(45) Date de publication et mention de la délivrance du brevet: **20.04.2011**
(21) Numéro de dépôt: 07871926.7
(22) Date de dépôt: 12.12.2007
(51) Int. Cl.: B60P 1/64, B62D 21/02, B62D 33/06, B60P 3/42, B60P 3/00, B65G 67/60

(54) **VEHICULE MODULAIRE DE TRANSPORT LOURD, NOTAMMENT PORTUAIRE**
MODULARES SCHWERTRANSPORTFAHRZEUG, INSBESONDERE ZUR VERWENDUNG IN HÄFEN
MODULAR HEAVY TRANSPORT VEHICLE, PARTICULARLY FOR USE IN PORTS

(30) Priorité: 03.08.2007 FR 0756921
(43) Date de publication de la demande: 14.04.2010
(73) Titulaire: Gaussin, Christophe, 1093 La Conversion (CH)
(72) Inventeur: Gaussin, Christophe, 1093 La Conversion (CH)
(74) Mandataire: Rhein, Alain
(86) Numéro de dépôt international: PCT/FR2007/052496
(87) Numéro de publication internationale: WO 2009/019330

(56) Documents cités:
- FR-A- 2 875 779
- FR-A- 2 903 372
- US-A- 3 392 857
- US-A- 5 492 402

## Description

La présente invention concerne un véhicule modulaire de transport lourd, notamment portuaire, comportant des moyens de roulement au sol conçus aptes à être entraînés par des moyens d'entraînement. Un tel véhicule est connu du US-A-5482402.

La présente invention entre dans le domaine des véhicules à déplacement terrestre.

Dans les installations portuaires, il est connu d'effectuer le transport des marchandises en transit, en particulier quand ces marchandises sont des conteneurs, par des trains de remorques ou semi-remorques attelées à un véhicule tracteur.

Les exploitants veulent limiter l'investissement au strict nécessaire, et attendent à cet effet une véritable polyvalence de leur matériel de manutention. L'immobilisation des véhicules de manutention pour reconditionnement et maintenance doit, de plus, être la plus réduite possible.

L'invention se propose de pallier ces problèmes de l'état de la technique en proposant un véhicule modulaire, conçu apte à constituer, selon le cas, un automoteur ou une remorque.

A cet effet, l'invention concerne un véhicule modulaire de transport lourd, notamment portuaire, comportant des moyens de roulement au sol conçus aptes à être entraînés par des moyens d'entraînement, caractérisé par le fait que ledit véhicule modulaire comporte des moyens de réception conçus aptes à coopérer avec des moyens complémentaires pour la réception de modules fonctionnels pour son équipement, selon le cas, en automoteur ou en remorque, selon que lesdits moyens de roulement comportent ou non des moyens d'entraînement.

Selon une autre caractéristique de l'invention, ledit véhicule modulaire comporte des premiers moyens de réception conçus aptes à recevoir des moyens d'entraînement amovibles

Selon une autre caractéristique de l'invention, ledit véhicule modulaire comporte des seconds moyens de réception conçus aptes à recevoir des premiers moyens d'attelage.

Selon une autre caractéristique de l'invention, ledit véhicule modulaire comporte des troisièmes moyens de réception conçus aptes à recevoir des seconds moyens d'attelage.

Selon une autre caractéristique de l'invention, ledit véhicule modulaire comporte des cinquièmes moyens de réception conçus aptes à recevoir une cabine amovible.

L'invention procure d'indéniables avantages à l'exploitant.

L'utilisation de modules fonctionnels, facilement interchangeables, réduit le temps d'indisponibilité pour maintenance, ainsi que le coût de cette maintenance. Cette conception modulaire offre une grande polyvalence aux véhicules du parc de l'exploitant. Notamment, des véhicules automoteurs tracteurs peuvent être transformés en remorques, et réciproquement.

D'autres caractéristiques et avantages de l'invention ressortiront de la description détaillée qui va suivre, se rapportant à un exemple de réalisation donné à titre indicatif et non limitatif.

La compréhension de cette description sera facilitée en se référant aux dessins joints dans lesquels :

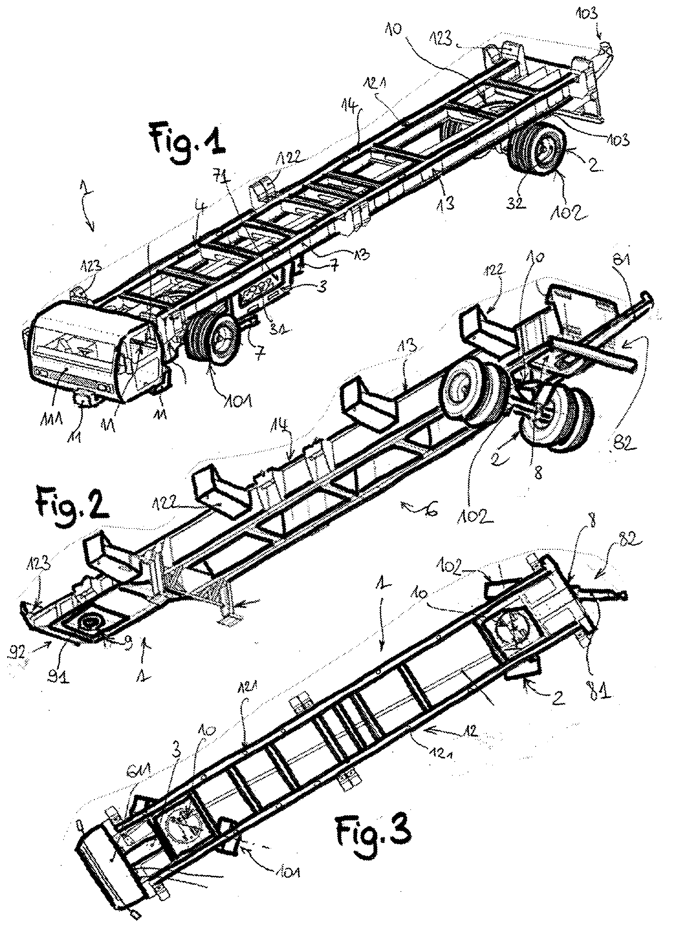

- la figure 1 représente de manière schématique, en perspective vue de dessus, une version d'un véhicule modulaire selon l'invention équipé en tant qu'automoteur ;
- la figure 2 représente de manière schématique, en perspective vue de dessous, une version d'un véhicule modulaire selon l'invention équipé en tant que remorque;
- la figure 3 représente de manière schématique, en vue de dessus, d'un autre véhicule équipé comme automoteur.

Tel que visible dans les figures des dessins joints, la présente invention concerne le domaine des véhicules à déplacement terrestre et en particulier conçus à être intégrés à des trains de remorques, ou à tracter de tels trains.

L'invention concerne un véhicule modulaire 1 de transport lourd, notamment portuaire, qui comporte des moyens de roulement au sol 2. Ces derniers sont conçus aptes à être entraînés par des moyens d'entraînement 3, dans un mode de réalisation où le véhicule modulaire 1 est un automoteur.

Ce véhicule modulaire 1 comporte une structure 4 conçue apte à recevoir et transporter une charge utile 5 telle qu'un conteneur ou similaire, ou encore à tracter une remorque 6 conçue apte à recevoir et transporter une telle charge utile 5.

La conception du véhicule modulaire 1 est modulaire, de façon à permettre son reconditionnement en fonction des besoins. Cette modularité permet notamment d'équiper un véhicule modulaire 1 comme automoteur, ou encore comme une remorque 6.

Pour permettre ces conditionnements, le véhicule modulaire selon l'invention comporte des moyens de réception conçus aptes à coopérer avec des moyens complémentaires pour la réception de modules fonctionnels pour son équipement, selon le cas, en automoteur ou en remorque.

Selon son mode de réalisation, le véhicule modulaire selon l'invention comporte des moyens de réception, qui comportent eux-mêmes tout ou partie des éléments de réception suivants:
- des premiers moyens de réception 7 conçus aptes à recevoir des moyens d'entraînement amovibles 71 ;
- des seconds moyens de réception 8 conçus aptes à recevoir des premiers moyens d'attelage 81 à une première extrémité 82 dudit véhicule modulaire 1;
- des troisièmes moyens de réception 9 conçus aptes à recevoir des seconds moyens d'attelage 91 à une seconde extrémité 92 dudit véhicule modulaire 1;
- des quatrièmes moyens de réception 10 conçus aptes à recevoir au moins un essieu moteur amovible 101 ou un essieu porteur 102 amovible ;
- des cinquièmes moyens de réception 11 conçus aptes à recevoir une cabine 111 amovible.
- des sixièmes moyens de réception 12, notamment sous forme de logements 121, conçus aptes à coopérer avec des moyens d'appui 122 ou/et de butée 123 des charges transportées.

De façon préférée, plusieurs de ces premiers 7, seconds 8, troisièmes 9, quatrièmes 10, cinquièmes 11, ou sixièmes 12 moyens de réception ont une définition géométrique identique entre eux, de façon à permettre le montage, ne serait-ce que pour l'emport vers une autre utilisation, de modules fonctionnels adaptés.

De façon préférée, les ensembles fonctionnels mobiles, conçus pour être fixés sur les différents moyens de réception, comportent des logements compatibles avec les fourches de chariots élévateurs usuels. Ainsi, leur échange est très facile, et ne nécessite aucun autre moyen de levage tel que pont roulant ou grue.

Un essieu porteur amovible 102 est préférentiellement conçu apte à être équipé de moyens d'attelage 103.

Dans une version préférée d'exécution, le véhicule modulaire 1 selon l'invention comporte un châssis 13 entièrement symétrique. Les différents moyens de réception peuvent avantageusement être disposés de façon symétrique, selon une direction longitudinale du châssis 13, par rapport à un centre de symétrie voisin ou confondu avec son centre de gravité. Il n'y a alors plus lieu de distinguer une extrémité avant ou arrière, dans la mesure où ces deux extrémités 82 et 92 sont conçues aptes à recevoir les mêmes dispositifs fonctionnels.

Les premiers 81 ou seconds 91 moyens d'attelage sont conçus aptes à la traction d'une ou plusieurs remorques 6 de transport de charges, ou à coopérer avec un automoteur pour l'entraînement du véhicule modulaire 1 sur lequel ils sont installés.

Le positionnement facile des charges, quelle que soit leur géométrie, est avantageusement obtenu par une polyvalence des surfaces destinées à recevoir de telles charges, et est encore facilité par la symétrie longitudinale du véhicule modulaire 1 selon l'invention. A cet effet, le véhicule modulaire 1 comporte avantageusement une plage 14 horizontale, c'est-à-dire parallèle aux appuis au sol, et conçue apte à recevoir les charges. C'est préférentiellement cette plage 14 qui comporte les sixièmes moyens de réception pour des moyens d'appui 122 ou/et d'arrêt 123 des charges transportées.

La plage 14 peut avantageusement comporter des évidements parallèles à sa surface, pour autoriser notamment l'enfilage de fourches de chariots élévateurs sous la charge.

Dans tous les cas, le véhicule modulaire 1 comporte un châssis 13 autoportant, spécialement conçu pour absorber la dépose de charges lourdes, telles que notamment des containers, et résister à l'impact lié à la dépose souvent brusque sous des portiques de manutention ou des spreaders.

Dans une réalisation préférée, le châssis 13 est en échelle, sur laquelle sont usinés ou/et fixés lesdits moyens de réception des modules fonctionnels. Ce châssis 13 comporte de préférence des moyens de réception conçus aptes à recevoir directement les charges.

Dans un mode de réalisation préféré, le véhicule modulaire 1 est un porte-conteneurs. Son châssis 13 est alors dimensionné, en version de base, pour la réception de conteneurs standard, de formats 20 pieds, 40 pieds, 45 pieds. Les moyens d'appui 122 et d'arrêt 123 sont alors positionnés selon le pas de ces conteneurs. Dans une version préférée et nullement limitative, un véhicule modulaire 1 peut recevoir, indifféremment, deux conteneurs de 20 pieds, ou un de 40 pieds, ou un de 45 pieds. Dans des versions plus lourdes, il est conçu apte à recevoir un multiple de ces quantités.

Les sixièmes moyens de réception 12 peuvent aussi être conçus pour la réception de charges longues, ou tubulaires, et avantageusement comporter des logements 121 à des positions connues, ou selon un pas constant, conçus pour recevoir des dispositifs complémentaires tels que manilles, élingues, boulons, ou similaire.

La cabine amovible 111 de conduite éventuelle est avancée et de préférence surbaissée, sous le niveau de la plage 14, et se trouve ainsi hors du champ d'évolution des conteneurs ou des charges lors de leur dépose sur le véhicule modulaire 1. L'accès du conducteur au poste de conduite devient très facile et ergonomique. Cette cabine 111 est encore conçue apte à être raccordée aux organes moteurs constituant les moyens d'entraînement 3 ou 71, et à des moyens de commande que comporte le véhicule modulaire 1. De façon préférée, cette cabine amovible 111 est enfilée latéralement tel un tiroir, sur des moyens de guidage tels que des cornières constituant les moyens de réception 11, et posée sur ces derniers, puis maintenue en position, par goupillage, boulonnage ou similaire.

Dans la version où le véhicule modulaire 1 est utilisé comme remorque 6, il comporte des seconds moyens d'attelage 91.

Pour pouvoir faire fonctionner en contre-rotation l'un par rapport à l'autre, des essieux moteurs 101 ou/et porteurs 102, sur un même véhicule modulaire 1, ce dernier comporte avantageusement un palonnier diagonal entre ces essieux.

Le véhicule modulaire 1 est conçu pour recevoir différents modules fonctionnels, outre ceux présentés ci-dessus, au niveau des différents moyens de réception 7, 8, 9, 10, 11, ou 12, ou encore au niveau d'autres moyens de réception spécifiques.

Conçus aptes à être assemblés sur un châssis 13, de préférence de type en échelle, ces modules fonctionnels peuvent notamment consister en :
- moyens complémentaires de réception ou/et de verrouillage en position de conteneurs ou de charges
- platine de pivotement pour un essieu avant
- platine de pivotement pour un essieu arrière
- essieu, avant ou arrière, muni de moyens de pivotement par rapport à ladite platine de pivotement
- moteur thermique ou électrique
- groupe hydraulique
- ensemble bloc moteur et groupe hydraulique
- moyens de stockage d'énergie électrique, ou/et pneumatique ou/et hydraulique conçus aptes à alimenter d'autres dispositifs, par exemple de freinage ou de bridage d'éléments transportés sur le véhicule modulaire ou au moins une de ses remorques, tels que batteries d'accumulateurs, ou réservoir de carburant
- moyens de conversion d'énergie récupérée au niveau des moyens de roulement 2
- moyens de raccordement rapides en énergie et servitudes
- moyens d'amortissement et de suspension
- essieu ou bogie fou
- essieu ou bogie avec amortisseur
- essieu ou bogie moteur complet avec moyens de motorisation, notamment intégrés dans des moyens de roulement 2
- moyens de protection, tels que pare-chocs, protection supérieure de cabine
- frein à rupture d'attelage
- moyens d'aide au positionnement
- kit de transformation réglementaire pour utilisation routière
- moyens de freinage
- moyens d'accouplement latéral à d'autres véhicules
- moyens de gestion du freinage dégressif sur des remorques constituant un train
- circuits pneumatiques et/ou hydrauliques particuliers
- moyens de commande.

Dans un mode de réalisation préféré, le véhicule modulaire selon l'invention est réalisé avec la réalisation d'arrondis sur les zones saillantes, notamment par l'incorporation à la structure de tôles roulées et de tubes rayonnés là où c'est possible.

De façon préférée, les moyens de réception et les moyens complémentaires sont agencés sous la forme de moyens de guidage conçus aptes à recevoir des tiroirs. Des moyens de verrouillage en position de tels tiroirs assurent la sécurité lors du fonctionnement.

D'autres alternatives de fixation sont possibles, notamment par boulonnage au niveau d'un réseau de trous de topographie normalisée pour la famille de matériel modulaire concernée.

## Revendications

1. Véhicule modulaire (1) de transport lourd, notamment portuaire, comportant des moyens de roulement au sol (2) conçus aptes à être entraînés par des moyens d'entraînement (3), **caractérisé par le fait que** ledit véhicule modulaire (1) comporte des moyens de réception conçus aptes à coopérer avec des moyens complémentaires pour la réception de modules fonctionnels pour son équipement, selon le cas, en automoteur ou en remorque, selon que lesdits moyens de roulement (2) comportent ou non des moyens d'entraînement.

2. Véhicule modulaire (1) selon la revendication 1, **caractérisé par le fait que** lesdits moyens de réception comportent des premiers moyens de réception (7) conçus aptes à recevoir des moyens d'entraînement amovibles (71)

3. Véhicule modulaire (1) selon l'une des revendications précédentes, **caractérisé par le fait que** lesdits moyens de réception comportent des seconds moyens de réception (8) conçus aptes à recevoir des premiers moyens d'attelage (81).

4. Véhicule modulaire (1) selon l'une des revendications précédentes, **caractérisé par le fait que** lesdits moyens de réception comportent des troisièmes moyens de réception (9) conçus aptes à recevoir des seconds moyens d'attelage (91).

5. Véhicule modulaire (1) selon l'une des revendications précédentes, **caractérisé par le fait que** lesdits moyens de réception comportent des quatrièmes moyens de réception (10) conçus aptes à recevoir un essieu moteur amovible (101)

6. Véhicule modulaire (1) selon l'une des revendications précédentes, **caractérisé par le fait que** lesdits moyens de réception comportent des quatrièmes moyens de réception (10) conçus aptes à recevoir un essieu porteur amovible (102), ce dernier étant conçu apte à être équipé de moyens d'attelage (103).

7. Véhicule modulaire (1) selon l'une des revendications précédentes, **caractérisé par le fait que** lesdits moyens de réception comportent des cinquièmes moyens de réception (11) conçus aptes à recevoir une cabine amovible (111).

8. Véhicule modulaire (1) selon l'une des revendications précédentes, **caractérisé par le fait que** lesdits moyens de réception comportent des sixièmes moyens de réception (12), notamment sous forme de logements (121), conçus aptes à coopérer avec des moyens d'appui (122) ou/et de butée (123) d'au moins une charge que ledit véhicule modulaire est conçu apte à transporter.

9. Véhicule modulaire (1) selon les revendications 2 à 8, **caractérisé par le fait que** plusieurs desdits premiers (7), seconds (8), troisièmes (9), quatrièmes (10), cinquièmes (11), ou sixièmes (12) moyens de réception ont une définition géométrique identique entre eux.

10. Véhicule modulaire (1) selon l'une des revendications précédentes, **caractérisé par le fait qu'**il comporte un châssis (13) en échelle sur lequel sont usinés ou/et fixés lesdits moyens de réception.

## Claims

1. Modular heavy transport vehicle (1), namely for use in harbours, including means for rolling on the ground (2) designed capable of being driven by driving means (4), wherein said modular vehicle (1) includes receiving means designed capable of cooperating with complementary means for receiving functional modules for its equipment, as the case may be, as a motor vehicle or a trailer, depending on whether said rolling means (2) include or not driving means.

2. Modular vehicle (1) according to claim 1, wherein said receiving means include first receiving means (7) designed capable of receiving removable driving means (71).

3. Modular vehicle (1) according to one of the preceding claims, wherein said receiving means include second receiving means (8) designed capable of receiving first coupling means (81).

4. Modular vehicle (1) according to one of the preceding claims, wherein said receiving means include third receiving means (9) designed capable of receiving second coupling means (91).

5. Modular vehicle (1) according to one of the preceding claims, wherein said receiving means include fourth receiving means (10) designed capable of receiving a removable motor axle (101).

6. Modular vehicle (1) according to one of the preceding claims, wherein said receiving means include fourth receiving means (10) designed capable of receiving a removable bearing axle (102), the latter being designed capable of being provided with coupling means (103).

7. Modular vehicle (1) according to one of the preceding claims, wherein said receiving means include fifth receiving means (11) designed capable of receiving a removable cabin (111).

8. Modular vehicle (1) according to one of the preceding claims, wherein said receiving means include sixth receiving means (12), namely in the form of recesses (121), designed capable of cooperating with resting means (122) or/and stopping means (123) for at least one load said modular vehicle is designed capable of transporting.

9. Modular vehicle (1) according to claims 2 to 8, wherein several of said first (7), second (8), third (9), fourth (10), fifth (11) or sixth (12) receiving means have a geometrical definition identical to each other.

10. Modular vehicle (1) according to one of the preceding claims, wherein it includes a ladder-like chassis, on which said receiving means are machined or/and fixed.

## Patentansprüche

1. Modulares Schwertransportfahrzeug (1) insbesondere zur Verwendung in Häfen, umfassend Mittel zum Rollen (2) auf dem Boden, die geeignet vorgesehen sind, um durch Antriebsmittel (3) angetrieben zu werden, **dadurch gekennzeichnet, dass** das besagte modulare Fahrzeug (1) Aufnahmemittel, die geeignet vorgesehen sind, um mit komplementären Mitteln für die Aufnahme von funktionellen Modulen für seine Ausstattung zusammenzuwirken, je nach dem Fall, als Zugmaschine oder als Anhänger umfasst, je nachdem, ob die besagten Mittel zum Rollen (2) Antriebsmittel umfassen oder nicht.

2. Modulares Fahrzeug (1) nach Anspruch 1, **dadurch gekennzeichnet, dass** die besagten Aufnahmemittel erste Aufnahmemittel (7) umfassen, die geeignet vorgesehen sind, um abnehmbare Antriebsmittel (71) aufzunehmen.

3. Modulares Fahrzeug (1) nach einem der vorgehenden Ansprüche, **dadurch gekennzeichnet, dass** die besagten Aufnahmemittel zweite Aufnahmemittel (8) umfassen, die geeignet vorgesehen sind, um erste Kupplungsmittel (81) aufzunehmen.

4. Modulares Fahrzeug (1) nach einem der vorgehenden Ansprüche, **dadurch gekennzeichnet, dass** die besagten Aufnahmemittel dritte Aufnahmemittel (9) umfassen, die geeignet vorgesehen sind, um zweite Kupplungsmittel (91) aufzunehmen.

5. Modulares Fahrzeug (1) nach einem der vorgehenden Ansprüche, **dadurch gekennzeichnet, dass** die besagten Aufnahmemittel vierte Aufnahmemittel (10) umfassen, die geeignet vorgesehen sind, um eine abnehmbare Triebachse (101) aufzunehmen.

6. Modulares Fahrzeug (1) nach einem der vorgehenden Ansprüche, **dadurch gekennzeichnet, dass** die besagten Aufnahmemittel vierte Aufnahmemittel (10) umfassen, die geeignet vorgesehen sind, um eine abnehmbare Tragachse (102) aufzunehmen, wobei diese letztere geeignet vorgesehen sei, um mit den Kupplungsmitteln (103) ausgestattet zu werden.

7. Modulares Fahrzeug (1) nach einem der vorgehenden Ansprüche, **dadurch gekennzeichnet, dass** die besagten Aufnahmemittel fünfte Aufnahmemittel (11) umfassen, die geeignet vorgesehen sind, um eine abnehmbare Kabine (111) aufzunehmen.

8. Modulares Fahrzeug (1) nach einem der vorgehenden Ansprüche, **dadurch gekennzeichnet, dass** die besagten Aufnahmemittel sechste Aufnahmemittel (12), insbesondere in Form von Ausnehmungen (121), umfassen, die geeignet vorgesehen sind, um mit Mitteln zur Abstützung (122) und/oder zum Begrenzungsanschlag (123) von zumindest einer Last zusammenzuwirken, die das besagte modulare Fahrzeug geeignet ist, um zu befördern.

9. Modulares Fahrzeug (1) nach den Ansprüchen 2 bis 8, **dadurch gekennzeichnet, dass** mehrere von den besagten ersten (7), zweiten (8), dritten (9), vierten (10), fünften (11) oder sechsten (12) Aufnahmemitteln eine identische geometrische Formgebung untereinander aufweisen.

10. Modulares Fahrzeug (1) nach einem der vorgehenden Ansprüche, **dadurch gekennzeichnet, dass** es einen Leiterrahmen (13) umfasst, an welchem die besagten Aufnahmemittel verarbeitet und/oder befestigt sind.
